# EUROPÄISCHE PATENTSCHRIFT

(11) **EP 1 660 554 B1**
(45) Veröffentlichungstag und Bekanntmachung des Hinweises auf die Patenterteilung: **05.11.2014**
(21) Anmeldenummer: 04764323.4
(22) Anmeldetag: 20.08.2004
(51) Int. Cl.: C08G 18/81, C09D 175/14

(54) **BINDEMITTEL FÜR STRAHLENHÄRTBARE WÄSSRIGE LACKE**
BINDING AGENTS FOR RADIATION-CURED AQUEOUS PAINTS
LIANTS POUR DES PEINTURES AQUEUSES RADIODURCISSABLES

(30) Priorität: 27.08.2003 AT 13462003
(43) Veröffentlichungstag der Anmeldung: 31.05.2006
(73) Patentinhaber: ALLNEX AUSTRIA GmbH, 8402 Werndorf (AT)
(72) Erfinder: LUNZER, Florian, A-8010 Graz (AT); AWAD, Rami-Raimund, A-8042 Graz (AT)
(74) Vertreter: Schoofs, Hilde
(86) Internationale Anmeldenummer: PCT/EP2004/009339
(87) Internationale Veröffentlichungsnummer: WO 2005/021615

(56) Entgegenhaltungen:
- EP-A- 0 726 162
- CH-A- 679 310
- US-A- 5 691 425

## Beschreibung

Die Erfindung betrifft Bindemittel für strahlenhärtbare wäßrige Lacke.

Wäßrige Lacke, die durch Bestrahlung mit UV-Licht härtbar sind, sind bekannt aus der EP-B 0 694 531 und aus der AT-B 404 733. Sie enthalten wasserverdünnbare Urethanharze als Bindemittel.

Die EP 0 726 162 B1 offenbart hochglänzende Druckpapiere, die Papier als Substrat enthalten, und eine durch Elektronenstrahlen gehärtete Harzüberzugsschicht.

Diese Lacke weisen jedoch für den praktischen Gebrauch Nachteile auf. Insbesondere erfüllen sie nicht die Anforderungen an den Korrosionsschutz bei der Lackierung von Metallen.

Es besteht daher die Aufgabe, wasserverdünnbare Bindemittel für die Lackierung von Metallen, insbesondere unedlen Metallen, zur Verfügung zu stellen, die einen guten Korrosionsschutz ergeben, wobei die Härtung durch Bestrahlen mit energiereichem Licht erfolgen kann.

Es wurde gefunden, daß strahlungshärtbare wasserverdünnbare Lacke auf Basis von Bindemitteln, die von Epoxidharzen abgeleitet sind, zu Beschichtungen mit gutem Korrosionsschutz führen.

Gegenstand der vorliegenden Erfindung sind daher Bindemittel für strahlenhärtbare wäßrige Lacke, enthaltend Reaktionsprodukte **ABCDE** aus Epoxidverbindungen **A** mit mindestens zwei Epoxidgruppen pro Molekül, ungesättigten Fettsäuren **B**, olefinisch ungesättigten Monomeren **C**, aliphatische Hydroxylgruppen enthaltenden ungesättigten Verbindungen **D** und mehrfunktionellen Isocyanaten **E**. Dabei sind die Verbindungen **C** stets direkt mit den Verbindungen **B** verbunden, ebenso wie die Verbindungen **D** stets direkt mit den Verbindungen **E** und die Verbindungen **A** stets direkt mit den Verbindungen **B** verbunden sind.

Ein weiterer Gegenstand der Erfindung ist ein Verfahren zur Herstellung der erfindungsgemäßen Bindemittel.

Schließlich betrifft die Erfindung auch Mischungen der erfindungsgemäßen Bindemittel mit wäßrigen Dispersionen von Acrylat-Copolymerisaten.

Die Epoxidverbindungen **A** haben mindestens zwei Epoxidgruppen pro Molekül und können aliphatisch, aromatisch oder gemischt aromatisch-aliphatisch sein. Geeignete aliphatische Di- oder Polyepoxide sind insbesondere alpha, omega-Diepoxyalkane wie 1,5-Diepoxyhexan oder 1,7-Diepoxyoctan, oder Äther von Glycidylalkohol mit zwei- oder mehrwertigen Alkoholen mit 2 bis 20 Kohlenstoffatomen wie Butandioldiglycidyläther oder Hexandioldiglycidyläther und Trimethylolpropantriglycidyläther, Äther von Glycidylalkohol mit Polyäthylen- oder Polypropylenglykol, oder Ester des Glycidylalkohols mit zwei- oder mehrbasigen aliphatischen Carbonsäuren wie Adipinsäurediglycidylester, Hexahydrophthalsäurediglycidylester oder Diglycidylester von dimeren Fettsäuren. Geeignete aromatische Di- oder Polyepoxide sind Diepoxydivinylbenzol und Diepoxydivinylnaphthalin. Geeignete gemischt aromatischaliphatische Di- oder Polyepoxide sind die Diglycidyläther von Bisphenol A, Bisphenol F, Dihydroxydiphenyl oder Dihydroxydiphenylsulfon. Ebenso geeignet sind Additionsprodukte der genannten Di- oder Polyepoxide an zwei- oder mehrfunktionelle Hydroxyverbindungen, wie beispielsweise die durch Advancement-Reaktion gewonnene Epoxidharze auf Basis von Bisphenol A.

Die ungesättigten Fettsäuren **B** sind aliphatische lineare oder verzweigte Monocarbonsäuren und haben mindestens eine olefinische Doppelbindung und 6 bis 30 Kohlenstoffatome. Geeignet sind unter anderem Palmitoleinsäure, Ölsäure, Elaidinsäure, Linolsäure, Linolensäure, Eleostearinsäure, Arachidonsäure, Erucasäure und Clupanodonsäure sowie deren Mischungen, insbesondere die bei der Verseifung von Ölen gewonnenen technischen Mischungen.

Besonders bevorzugt sind solche Fettsäuren und Mischungen dieser Fettsäuren, die mindestens zwei olefinische Doppelbindungen aufweisen, die ebenfalls bevorzugt nicht konjugiert sind. Geeignet sind insbesondere Leinölfettsäure, Tallölfettsäure und Sonnenblumenölfettsäure.

Die olefinisch ungesättigten Monomeren **C** enthalten bevorzugt mindestens einen Massenanteil von 10 % einer olefinisch ungesättigten Säure, bevorzugt einer olefinisch ungesättigten Carbonsäure oder Dicarbonsäure. Es ist auch möglich, Halbester von olefinisch ungesättigte Dicarbonsäuren mit einem Mol eines Alkohols je einem Mol der Dicarbonsäure einzusetzen. Bevorzugte olefinisch ungesättigte Säuren sind die Acryl- und Methacrylsäure, die Vinylessigsäure sowie die Croton- und Isocrotonsäure. Als Halbester sind zum Beispiel Monomethylester der Maleinsäure, der Fumarsäure, oder der Itacon-, Citracon- oder Mesaconsäure bevorzugt einzusetzen. In Mischung mit den genannten sauren Monomeren können Ester der genannten Säuren mit ein- oder mehrwertigen Alkoholen, wie Methyl(meth)acrylat, Äthyl(meth)acrylat, n- oder iso-Propyl(meth)acrylat, n- oder tert.-Butyl(meth)acrylat oder 2-Äthylhexyl(meth)acrylat eingesetzt werden, ebenso Diester der genannten Dicarbonsäuren, wie Dimethylmaleinat, und die hydroxyfunktionellen Verbindungen (die auch als Verbindungen **D** eingesetzt werden) wie Hydroxyäthyl(meth)acrylat, Hydroxypropyl(meth)acrylat, Hydroxybutyl(meth)acrylat und Trimethylolpropan-mono- oder -di-(meth)acrylat. Weitere geeignete Monomere sind Styrol, Vinyltoluol, alpha-Methylstyrol, para-Methylstyrol, Vinylacetat und (Meth)Acrylnitril.

Die ungesättigten, Hydroxylgruppen enthaltenden aliphatischen Verbindungen **D** sind bevorzugt Ester zwei- oder mehrwertiger Alkohole mit olefinisch ungesättigten Säuregruppen enthaltenden Monomeren, insbesondere mit Acryl- und Methacrylsäure. Besonders geeignet sind Hydroxyäthyl- und Hydroxypropyl-(meth)acrylat.

Die mehrfunktionellen Isocyanate **E** sind aromatische, aliphatische und gemischt aromatisch-aliphatische Isocyanate mit mindestens zwei Isocyanatgruppen. Bevorzugt werden aliphatische Isocyanate und solche aromatischen Isocyanate, und unter diesen die Diisocyanate, bei denen die Isocyanatgruppen an ein aliphatisches Kohlenstoffatom gebunden sind, wie Xylylendiisocyanat und Tetramethylxylylendiisocyanat. Bevorzugte aliphatische Isocyanate sind lineare, verzweigte und cyclische Isocyanate mit 4 bis 12 Kohlenstoffatomen wie Hexamethylendiisocyanat, Trimethylhexandiisocyanat, Isophorondiisocyanat und 1,3- und 1,4-Bis(isocyanato)cyclohexan.

Die Erfindung betrifft auch ein Verfahren zur Herstellung der Bindemittel **ABCDE**, wobei im ersten Schritt die Epoxidverbindungen **A** mit den ungesättigten Fettsäuren **B** zu Addukten reagiert werden, wobei die Mengen der Edukte bevorzugt so gewählt werden, daß auf ein Mol der Epoxidgruppen in **A** mindestens 0,5 mol der Säuregruppen der Fettsäuren **B** kommen. Bevorzugt wird ein Verhältnis von mindestens 0,7 mol/mol und insbesondere 0,9 mol/mol bis 1,0 mol/mol. Im zweiten Schritt werden die so gebildeten Addukte **AB** mit den olefinisch ungesättigten Monomeren **C** in Gegenwart von radikalischen Initiatoren umgesetzt, wobei die Verbindungen **C** polymerisieren und zumindest teilweise Pfropfäste auf den Addukten **AB** bilden, und wobei die Pfropfung bevorzugt an den Doppelbindungen der Fettsäuren erfolgt. Die im zweiten Schritt gebildeten Pfropfcopolymerisate **ABC** werden anschließend durch Urethanbildung mit den in einem separaten Schritt hergestellten halbverkappten Isocyanaten **DE** aus der Reaktion der hydroxyfunktionellen olefinisch ungesättigten Monomeren **D** mit den mehrfunktionellen, bevorzugt difunktionellen Isocyanaten **E** zu den Produkten **ABCDE** umgesetzt. Dabei wird die Reaktion bevorzugt so geführt, daß das Stoffmengenverhältnis von Isocyanatgruppen in **DE** zu den Hydroxylgruppen in **B** 0,2 bis 0,9 beträgt, bevorzugt wird das Stoffmengenverhältnis so gewählt, daß das Reaktionsprodukt **ABCDE** eine Säurezahl von 5 mg/g bis 80 mg/g, insbesondere von 10 mg/g bis 50 mg/g aufweist.

Die Säurezahl ist gemäß DIN EN ISO 3682 definiert als der Quotient derjenigen Masse ***m***_{KOH} an Kaliumhydroxid, die erforderlich ist, um eine zu untersuchende Probe zu neutralisieren, und der Masse ***m***_{B} dieser Probe (Masse des Feststoffes in der Probe bei Lösungen oder Dispersionen); ihre übliche Einheit ist "mg/g".

Die erfindungsgemäßen Bindemittel eignen sich besonders zur Formulierung von (durch UV-Strahlung oder durch Elektronenstrahlen) strahlenhärtenden Beschichtungsmitteln. Dazu werden Photoinitiatoren zugesetzt, die bei Bestrahlung mit energiereichem Licht Radikale bilden, die eine Härtung durch Polymerisation auslösen. Besonders bemerkenswert ist bei den erfindungsgemäßen Bindemitteln die gute Verträglichkeit mit wäßrigen Acrylatdispersionen. Solche Dispersionen können im Massenverhältnis bis zu 50:50 (jeweils bezogen auf die Masse der Festkörper der Dispersionen) zugemischt werden, ohne daß die Härtungsgeschwindigkeit und die Eigenschaften des resultierenden Lackfilms negativ beeinflußt werden. Dabei eignen sich sowohl die bekannten, Hydroxylgruppen enthaltenden Acrylatdispersionen, als auch die selbstvernetzenden Acrylatdispersionen.

Bevorzugte Acrylatdispersionen sind selbstvernetzende Acrylatdispersionen auf Basis von Copolymerisaten von (Meth)Acrylsäureestern von linearen oder verzweigten aliphatischen Monoalkoholen mit 3 bis 10 Kohlenstoffatomen, (Meth)Acrylsäureestern des Methanols und Äthanols, (Meth)Acrylsäureestern von zweiwertigen aliphatischen Alkoholen mit 2 bis 6 Kohlenstoffatomen, insbesondere von Glykol, 1,2- und 1,3-Propandiol, 1,2- und 1,4-Butandiol sowie 1,6-Hexandiol, Styrol und Vinyltoluol sowie Carbonylgruppen enthaltenden olefinisch ungesättigten Monomeren wie Diacetonacrylamid, und hydroxyfunktionelle Acrylatdispersionen auf Basis von Copolymerisaten von (Meth)Acrylsäureestern von linearen oder verzweigten aliphatischen Monoalkoholen mit 3 bis 10 Kohlenstoffatomen, (Meth)Acrylsäureestern des Methanols und Äthanols, (Meth)Acrylsäureestern von zweiwertigen aliphatischen Alkoholen mit 2 bis 6 Kohlenstoffatomen, insbesondere von Glykol, 1,2- und 1,3-Propandiol, 1,2- und 1,4-Butandiol sowie 1,6-Hexandiol, Styrol und Vinyltoluol. Im Fall der selbstvernetzenden Acrylatdispersionen werden Diamine oder bevorzugt Dihydrazine oder Dihydrazide von aliphatischen Dicarbonsäuren mit 2 bis 8 Kohlenstoffatomen eingesetzt; besonders bevorzugt ist Adipinsäuredihydrazid.

Mit den so formulierten Bindemitteln werden Beschichtungen auch auf unedlen Metallen möglich, die dem Substrat einen guten Korrosionsschutz verleihen.

Die Erfindung wird durch die nachstehenden Beispiele erläutert.

### Beispiele

### Beispiel 1

560 g Leinölfettsäure wurden mit 0,6 g Triphenylphosphin als Katalysator auf 140 °C aufgeheizt. 380 g Bisphenol A-Diglycidyläther wurden während zwei Stunden unter gutem Rühren zugegeben, die Mischung wurde bei dieser Temperatur unter Rühren gehalten, bis keine Epoxidgruppen mehr nachzuweisen waren.

### Beispiel 2

100 g des Fettsäure-Epoxidaddukts aus Beispiel 1 wurden mit 70 g Xylol auf 140 °C erhitzt. Zu dieser Vorlage wurden während 8 Stunden eine Mischung von 29,0 g Butylmethacrylat, 15,6 g Methacrylsäure und getrennt davon 2,0 g Di-tert.-Butylperoxid zugegeben. Es wurde nach beendeter Zugabe noch weitere 2 Stunden bei 140 °C gehalten, anschließend wurde auf Zimmertemperatur abgekühlt. Der Festkörper-Massenanteil der erhaltenen Lösung betrug 68,1 %.

### Beispiel 3

222,3 g Isophorondiisocyanat wurden mit 0,5 g Triphenylphosphit auf 50 °C erwärmt. Während einer Stunde wurden 116,1 g Hydroxyäthylacrylat und 0,2 g Hydrochinonmonomethyläther zugesetzt und anschließend unter Rühren auf 80 °C geheizt. Es wurde solange gehalten, bis der Massenanteil an freien Isocyanatgruppen auf 12 % gefallen war.

### Beispiel 4

140 g des Produkts aus Beispiel 2 wurden mit 40,0 g des Produkts aus Beispiel 3 gemischt und bei 80 °C so lange unter Rühren gehalten, bis der Massenanteil an freien Isocyanatgruppen auf unter 0,1 % gesunken war. Dann wurde die Temperatur auf 130 °C gesteigert und durch Destillation unter vermindertem Druck das Xylol abgezogen. Nach Abkühlen auf 95 °C wurden 28 g einer wäßrigen Lösung von Lithiumhydroxid (5 g LiOH in 100 g der wäßrigen Lösung) hinzugefügt. Anschließend wurde bei 95 °C über eine Stunde 146 g voll entsalztes Wasser zugegeben. Man erhielt eine wäßrige Dispersion mit einem Festkörper-Massenanteil von ca. 44 % und einer Säurezahl von 47,8 mg/g.

### Beispiel 5

222,3 g Isophorondiisocyanat wurden mit 0,25 g Dibutylzinndilaurat und 0,5 g Triphenylphosphit auf 40 °C erwärmt. Während einer Stunde wurden 130,1 g Hydroxypropylacrylat und 0,2 g Hydrochinonmonomethyläther zugesetzt und anschließend unter Rühren auf 80 °C geheizt. Es wurde solange bei der Temperatur gehalten, bis der Massenanteil an freien Isocyanatgruppen auf 12 % gefallen war.

### Beispiel 6

Zu 147,1 g des Produkts aus Beispiel 2 wurden bei 80 °C 60,0 g des Produkts aus Beispiel 5, 0,01 g Dibutylzinndilaurat und 0,5 g Hydrochinonmonomethyläther zugemischt und bei 80 °C so lange unter Rühren gehalten, bis der Massenanteil an freien Isocyanatgruppen auf unter 0,1 % gesunken war. Dann wurde die Temperatur auf 130 °C gesteigert und durch Destillation unter vermindertem Druck das Xylol abgezogen. Nach Abkühlen auf 95 °C wurden 29,1 g einer wäßrigen Lösung von Lithiumhydroxid (5 g LiOH in 100 g der wäßrigen Lösung) hinzugefügt. Anschließend wurde bei 95 °C über eine Stunde 215 g voll entsalztes Wasser zugegeben. Man erhielt eine wäßrige Dispersion mit einem Festkörper-Massenanteil von ca. 40 %.

### Beispiel 7 Lacktest

Jeweils 100 g der Produkte aus Beispiel 4 und Beispiel 6 wurden mit Zusatz von 6 g einer Lösung von ®Irgacure 184 in Butylglykol (50 g ®Irgacure 184 in 100 g der Lösung) zu Lacken 7.1 und 7.2 verarbeitetet.

Dabei wurden die folgenden Ergebnisse erhalten:
Bei Aufziehen der Lacke auf ein Eisenblech mit einer Naßfilmstärke von 120 :m, Trocknen bei 50 ° bis 60 °C während 10 Minuten und nachfolgender Härtung durch Bestrahlen mit einer Quecksilberdampflampe (Leistung 80 W, in einer Entfernung von 10 cm und einer Bandgeschwindigkeit von 4 m/min) ergab sich eine stippenfreie und glatte Beschichtung, die gemessene Erichsen-Tiefung (ISO 1520) war in beiden Fällen 9 mm, das Ergebnis der Schlagprüfung (Erichsen, ASTM D-2794-90) und des Gitterschnitt-Tests (DIN EN ISO 2409) war bei dem Lack 7.1 10/10 bzw. 3/5 und bei dem Lack 7.2 30/20 und 0/5.

### Beispiel 8 Beständigkeitstest auf Holz

Nach Aufziehen der genannten Lacke aus Beispiel 7 auf Holzplatten (200 :m, zweifache Beschichtung mit Trocknen bei 50 ° C bis 60 °C während 10 Minuten nach jeder Beschichtung) und Härtung wie im Beispiel 7 wurde die Beständigkeit der Beschichtungen gemäß DIN 68861, Teil 1A gemessen. Die folgenden Ergebnisse wurden erhalten (Einwirkdauer jeweils 16 Stunden):

| Prüfmittel | Beschichtung mit Lack 7.1 | Beschichtung mit Lack 7.2 |
|---|---|---|
| wäßrige Ammoniaklösung (10 %) | 0 | 0 |
| wäßrige Äthanollösung (48 %) | 0 | 0 |
| Rotwein | 0 | 0 |
| Pulverkaffee | 0 | 1 |
| schwarzer Tee | 0 | 0 |
| voll entsalztes Wasser | 0 | 0 |
| Lippenstift | 0 | 0 |
| schwarze Kugelschreibertinte | 0 | 0 |

### Beispiel 9 Mischungen mit Acrylatdispersionen

Es wurden Mischungen der Lacke aus 7.1 und 7.2 mit verschiedenen Acrylatdispersionen hergestellt:
9.1 selbstvernetzende Acrylatdispersion auf Basis von Butylacrylat-Methylmethacrylat-Diacetonacrylamid-Copolymerisat und Adipinsäuredihydrazid als Vernetzer; 45 % Festkörper-Massenanteil
9.2 hydroxyfunktionelle Acrylatdispersion auf Basis von Butylacrylat, Butylmethacrylat und Styrol
9.3 hydroxyfunktionelle Acrylatdispersion auf Basis von Butylmethacrylat, Hydroxyäthylmethacrylat und Styrol
9.4 selbstvernetzende Acrylatdispersion auf Basis von Butylacrylat-Methylmethacrylat-Styrol-Diacetonacrylamid-Copolymerisat und Adipinsäuredihydrazid als Vernetzer

Dabei sind die Mischungen (Massenverhältnis der Festkörper des Bindemittels gemäß der Erfindung zu Acrylat jeweils 90:10, 75:25 und 50:50), in allen Fällen klar (ohne Trübung), die beschichteten Flächen sind im Fall der Verwendung des Lacks aus 7.1 durchweg einwandfrei, während bei Verwendung des Lacks aus 7.2 mit der Acrylatdispersion 9.3 einige Schlieren auf der Fläche festzustellen waren. Beim Abmischen kommerzieller strahlenhärtbarer Bindemittel mit Acrylatdispersionen entsprechend den oben genannten wurde in allen Fällen bereits in der Mischung eine Trübung festgestellt; alle damit beschichteten Flächen wiesen Filmstörungen auf.

## Patentansprüche

1. Bindemittel für strahlenhärtbare wäßrige Lacke, enthaltend Reaktionsprodukte **ABCDE** aus Epoxidverbindungen **A** mit mindestens zwei Epoxidgruppen pro Molekül, ungesättigten Fettsäuren **B**, olefinisch ungesättigten Monomeren **C**, umfassend Carbonsäure oder Dicarbonsäure, Halbester von olefinisch ungesättigten Dicarbonsäuren, Diester der Dicarbonsäuren, Ester der genannten Säuren mit ein- oder mehrwertigen Alkoholen, sowie hydroxyfunktionelle Verbindungen hiervon, Styrol, Vinyltoluol, alpha-Methylstyrol, para-Methylstyrol, Vinylacetat und (Meth)Acrylnitril, aliphatische Hydroxylgruppen enthaltende ungesättigte Verbindungen **D** und mehrfunktionellen Isocyanaten **E**, **dadurch gekennzeichnet, daß** die Verbindungen **A** mit den Verbindungen **B** durch eine beta-Hydroxyester-Bindung verbunden sind, und die Verbindungen **C** zumindest teilweise Pfropfäste auf den Addukten **AB** bilden, und die Verbindungen **C** stets direkt mit den Verbindungen **B** verbunden, wobei Verbindungen **ABC** entstehen, und daß die Verbindungen **D** mit den Verbindungen **E** durch eine Urethangruppe zu halbverkappten Isocyanaten **DE** verbunden sind, und daß die Verbindungen **ABC** ebenfalls unter Urethanbildung mit den Verbindungen **DE** verbunden sind.

2. Bindemittel nach Anspruch 1, **dadurch gekennzeichnet, daß** die Epoxidverbindungen A ausgewählt sind aus Äthern von Glycidylalkohol mit zwei- oder mehrwertigen Alkoholen mit 2 bis 20 Kohlenstoffatomen, Äthern von Glycidylalkohol mit Polyäthylen- oder Polypropylenglykol, Estern des Glycidylalkohols mit zwei- oder mehrbasigen aliphatischen Carbonsäuren sowie den Diglycidyläthern von Bisphenol A, Bisphenol F, Dihydroxydiphenyl und Dihydroxydiphenylsulfon und Additionsprodukten der genannten Diepoxide an zwei- oder mehrfunktionelle Hydroxyverbindungen.

3. Bindemittel nach Anspruch 1, **dadurch gekennzeichnet, daß** die ungesättigten Fettsäuren B aliphatische lineare oder verzweigte Monocarbonsäuren sind und mindestens eine olefinische Doppelbindung und 6 bis 30 Kohlenstoffatome haben.

4. Bindemittel nach Anspruch 1, **dadurch gekennzeichnet, daß** die olefinisch ungesättigten Monomeren C mindestens einen Massenanteil von 10 % einer olefinisch ungesättigten Säure enthalten.

5. Bindemittel nach Anspruch 1, **dadurch gekennzeichnet, daß** die ungesättigten Hydroxylgruppen enthaltenden aliphatischen Verbindungen D Ester zwei- oder mehrwertiger Alkohole mit olefinisch ungesättigten Säuregruppen enthaltenden Monomeren sind.

6. Bindemittel nach Anspruch 1, **dadurch gekennzeichnet, daß** die mehrfunktionellen Isocyanate E aromatische, aliphatische und gemischt aromatisch-aliphatische Isocyanate mit mindestens zwei Isocyanatgruppen sind.

7. Verfahren zur Herstellung von Bindemittel nach Anspruch 1, **dadurch gekennzeichnet, daß**
- im ersten Schritt die Epoxidverbindungen **A** mit den ungesättigten Fettsäuren **B** zu Addukten reagiert werden, wobei auf ein Mol der Epoxidgruppen in **A** mindestens 0,5 mol der Säuregruppen der Fettsäuren **B** eingesetzt werden,
- im zweiten Schritt die so gebildeten Addukte **AB** mit den olefinisch ungesättigten Monomeren **C** in Gegenwart von radikalischen Initiatoren umgesetzt werden, wobei die Verbindungen **C** polymerisieren und zumindest teilweise Pfropfäste auf den Addukten **AB** bilden,
- in einem separaten dritten Schritt halbverkappte Isocyanate **DE** durch Reaktion der hydroxyfunktionellen olefinisch ungesättigten Monomeren **D** mit den mehrfunktionellen, bevorzugt difunktionellen Isocyanaten **E** hergestellt werden, die
- im vierten Schritt mit den im zweiten Schritt gebildeten Pfropfcopolymerisate **ABC** durch Urethanbildung zu den Produkten **ABCDE** umgesetzt werden.

8. Verfahren nach Anspruch 7, **dadurch gekennzeichnet, daß** im ersten Schritt ein Verhältnis von mindestens 0,7 mol/mol gewählt wird.

9. Verfahren nach Anspruch 7, **dadurch gekennzeichnet, daß** im vierten Schritt ein Stoffmengenverhältnis von Isocyanatgruppen in **DE** zu den Hydroxylgruppen in **ABC** von 0,2 bis 0,9 gewählt wird.

10. Verfahren nach Anspruch 7, **dadurch gekennzeichnet, daß** im vierten Schritt das Stoffmengenverhältnis so gewählt wird, daß das Reaktionsprodukt **ABCDE** eine Säurezahl von 5 mg/g bis 80 mg/g aufweist.

11. Verwendung von Bindemitteln nach Anspruch 1 zur Herstellung von strahlenhärtenden Beschichtungsmitteln, umfassend Mischen von Bindemittel gemäß Anspruch 1 und Photoinitiatoren.

12. Verwendung nach Anspruch 11, **dadurch gekennzeichnet, daß** zusätzlich wäßrige Acrylatdispersionen zugemischt werden.

## Claims

1. Binders for radiation-curable aqueous coating materials, comprising reaction products **ABCDE** of epoxide compounds **A** having at least two epoxide groups per molecule, unsaturated fatty acids **B**, olefinically unsaturated monomers **C**, comprising carboxylic acid or dicarboxylic acid, monoesters of olefinically unsaturated dicarboxylic acids, diesters of the dicarboxylic acids, esters of the stated acids with mono- or polyhydric alcohols, and also hydroxy-functional compounds thereof, styrene, vinyltoluene, alpha-methylstyrene, para-methylstyrene, vinyl acetate and (meth)acrylonitrile, unsaturated compounds **D** comprising aliphatic hydroxyl groups, and polyfunctional isocyanates **E, characterized in that** the compounds **A** are joined to the compounds **B** by a beta-hydroxy ester bond, and the compounds **C** at least in part form grafts onto the adducts **AB,** and the compounds **C** are always joined directly to the compounds **B**, forming compounds **ABC,** and **in that** the compounds **D** are joined to the compounds E through a urethane group to form semi-masked isocyanates **DE**, and **in that** the compounds **ABC** are joined likewise with formation of urethane to the compounds **DE**.

2. Binders according to Claim 1, **characterized in that** the epoxide compounds **A** are selected from ethers of glycidyl alcohol with di- or polyhydric alcohols having 2 to 20 carbon atoms, ethers of glycidyl alcohol with polyethylene glycol or polypropylene glycol, esters of glycidyl alcohol with di- or polybasic aliphatic carboxylic acids and also the diglycidyl ethers of bisphenol A, bisphenol F, dihydroxybiphenyl and dihydroxydiphenyl sulphone and adducts of the stated diepoxides with di- or polyfunctional hydroxy compounds.

3. Binders according to Claim 1, **characterized in that** the unsaturated fatty acids **B** are aliphatic linear or branched monocarboxylic acids and have at least one olefinic double bond and 6 to 30 carbon atoms.

4. Binders according to Claim 1, **characterized in that** the olefinically unsaturated monomers **C** comprise at least a mass fraction of 10% of an olefinically unsaturated acid.

5. Binders according to Claim 1, **characterized in that** the unsaturated aliphatic compounds **D** comprising hydroxyl groups are esters of di- or polyhydric alcohols with olefinically unsaturated monomers comprising acid groups.

6. Binders according to Claim 1, **characterized in that** the polyfunctional isocyanates **E** are aromatic, aliphatic and mixed aromatic-aliphatic isocyanates having at least two isocyanate groups.

7. Process for preparing binders according to Claim 1, **characterized in that**
- in the first step, the epoxide compounds **A** are reacted with the unsaturated fatty acids **B** to give adducts, using at least 0.5 mol of the acid groups of the fatty acids **B** per mole of the epoxide groups in **A**,
- in the second step, the resultant adducts **AB** are reacted with the olefinically unsaturated monomers **C** in the presence of radical initiators, the compounds **C** polymerizing and forming at least in part grafts onto the adducts **AB**,
- in a separate third step, semi-masked isocyanates **DE** are prepared by reacting the hydroxy-functional olefinically unsaturated monomers **D** with the polyfunctional, preferably difunctional isocyanates **E**, which
- in the fourth step are reacted by urethane formation with the graft copolymers **ABC** formed in the second step, to give the products **ABCDE**.

8. Process according to Claim 7, **characterized in that** in the first step, a ratio of at least 0.7 mol/mol is selected.

9. Process according to Claim 7, **characterized in that** in the fourth step, an amount-of-substance ratio of isocyanate groups in **DE** to the hydroxyl groups in **ABC** of 0.2 to 0.9 is selected.

10. Process according to Claim 7, **characterized in that** in the fourth step, the amount-of-substance ratio is selected such that the reaction product **ABCDE** has an acid number of 5 mg/g to 80 mg/g.

11. Use of binders according to Claim 1 for producing radiation-curing coating compositions, comprising mixing of binder according to Claim 1 and photoinitiators.

12. Use according to Claim 11, **characterized in that** additionally aqueous acrylate dispersions are admixed.

## Revendications

1. Liant pour peintures à l'eau durcissables par irradiation, contenant des produits de réaction **ABCDE** de composés époxydes **A** comportant au moins deux groupes époxy par molécule, d'acides gras insaturés **B**, de monomères à insaturation oléfinique **C**, comprenant un acide carboxylique ou dicarboxylique, des hémiesters d'acides dicarboxyliques à insaturation oléfinique, des diesters des acides dicarboxyliques, des esters desdits acides avec des alcools mono- ou polyhydriques, ainsi que des composés à fonction hydroxy de ceux-ci, le styrène, le vinyltoluène, l'alpha-méthylstyrène, le para-méthylstyrène, l'acétate de vinyle et le (méth)acrylonitrile, de composés aliphatiques insaturés **D** comportant des groupes hydroxy et d'isocyanates polyfonctionnels **E**, **caractérisé en ce que** les composés **A** sont attachés aux composés **B** par une liaison bêta-hydroxyester, et les composés **C** forment au moins en partie des rameaux greffés sur les adduits **AB**, et les composés **C** sont toujours attachés directement aux composés **B**, de sorte qu'il en résulte des composés **ABC**, et **en ce que** les composés **D** sont attachés aux composés **E** par un groupe uréthane en isocyanates **DE** à moitié coiffés, et **en ce que** les composés **ABC** sont également attachés aux composés **DE** avec formation d'uréthanes.

2. Liant selon la revendication 1, **caractérisé en ce que** les composés époxydes **A** sont choisis parmi des éthers d'alcool glycidylique avec des alcools di- ou polyhydriques ayant de 2 à 20 atomes de carbone, des éthers d'alcool glycidylique avec le polyéthylène- ou polypropylèneglycol, des esters de l'alcool glycidylique avec des acides carboxyliques aliphatiques di- ou polybasiques ainsi que les diglycidyléthers de bisphénol A, bisphénol F, dihydroxydiphényle et dihydroxydiphénylsulfone et des produits d'addition desdits diépoxydes sur des composés hydroxylés di- ou polyfonctionnels.

3. Liant selon la revendication 1, **caractérisé en ce que** les acides gras insaturés **B** sont des acides monocarboxyliques aliphatiques linéaires ou ramifiés et comportent au moins une double liaison oléfinique et de 6 à 30 atomes de carbone.

4. Liant selon la revendication 1, **caractérisé en ce que** les monomères à insaturation oléfinique **C** contiennent au moins une proportion en masse de 10 % d'un acide à insaturation oléfinique.

5. Liant selon la revendication 1, **caractérisé en ce que** les composés aliphatiques insaturés **D** comportant des groupes hydroxy sont des esters d'alcools di- ou polyhydriques avec des monomères à insaturation oléfinique comportant des groupes acides.

6. Liant selon la revendication 1, **caractérisé en ce que** les isocyanates polyfonctionnels **E** sont des isocyanates aromatiques, aliphatiques et aromatiques-aliphatiques mixtes comportant au moins deux groupes isocyanate.

7. Procédé pour la préparation d'un liant selon la revendication 1, **caractérisé en ce que**
- dans la première étape on fait réagir les composés époxydes **A** avec les acides gras insaturés **B** pour aboutir à des adduits, en utilisant au moins 0,5 mole des groupes acides des acides gras **B** pour une mole des groupes époxy contenus dans **A**.
- dans la deuxième étape on fait réagir les adduits **AB** ainsi formés avec les monomères à insaturation oléfinique **C** en présence d'amorceurs de radicaux, les composés **C** polymérisant et formant au moins en partie des rameaux greffés sur les adduits **AB**,
- dans une troisième étape distincte on prépare des isocyanates à moitié coiffés **DE** par réaction des monomères à insaturation oléfinique **D** à fonction hydroxy avec les isocyanates **E** polyfonctionnels, de préférence difonctionnels, qui
- dans la quatrième étape sont mis en réaction avec les copolymérisats greffés **ABC** formés dans la deuxième étape, par formation d'uréthane, pour donner les produits **ABCDE**.

8. Procédé selon la revendication 7, **caractérisé en ce que** dans la première étape on choisit un rapport d'au moins 0,7 mole/mole.

9. Procédé selon la revendication 7, **caractérisé en ce que** dans la quatrième étape on choisit un rapport de quantités de substances des groupes isocyanate dans **DE** aux groupes hydroxy dans **ABC** de 0,2 à 0,9.

10. Procédé selon la revendication 7, **caractérisé en ce que** dans la quatrième étape on choisit le rapport de quantités de substances de manière que le produit de réaction **ABCDE** présente un indice d'acide de 5 mg/g à 80 mg/g.

11. Utilisation de liants selon la revendication 1, pour la préparation de produits de revêtement durcissables par irradiation, comprenant le mélange de liant selon la revendication 1 et de photoamorceurs.

12. Utilisation selon la revendication 11, **caractérisée en ce qu'**on ajoute en outre des dispersions aqueuses d'acrylates.
